# EUROPEAN PATENT APPLICATION

(11) **EP 4 545 922 A1**
(43) Date of publication of application: **30.04.2025**
(21) Application number: 23852188.4
(22) Date of filing: 28.04.2023
(51) Int. Cl.: G01J 3/26, G01J 3/02

(54) **LIGHT DETECTION DEVICE AND APERTURE SECTION**

(30) Priority: 10.08.2022 JP 2022128220
(71) Applicant: Hamamatsu Photonics K.K., Hamamatsu-shi, Shizuoka 435-8558 (JP)
(72) Inventor: OYAMA, Hiroki, Hamamatsu-shi, Shizuoka 435-8558 (JP); SHIBAYAMA, Katsumi, Hamamatsu-shi, Shizuoka 435-8558 (JP); YOKINO, Takafumi, Hamamatsu-shi, Shizuoka 435-8558 (JP); KASAHARA, Takashi, Hamamatsu-shi, Shizuoka 435-8558 (JP); KURAMOTO, Yumi, Hamamatsu-shi, Shizuoka 435-8558 (JP)
(74) Representative: Boult Wade Tennant LLP
(86) International application number: PCT/JP2023/016972
(87) International publication number: WO 2024/034202

(57) **Abstract**

A light detection device includes a package having an opening, a light transmission section that closes the opening and has a light-emitting surface located in the package, a Fabry-Perot interference filter including a pair of mirror sections, a distance between which being variable, a light detector, and a first aperture section having a first aperture located between the light-emitting surface and the Fabry-Perot interference filter in the package. The first aperture section includes a first surrounding part surrounding the first aperture. A surface of the first surrounding part on the Fabry-Perot interference filter side is separated from the Fabry-Perot interference filter and has light absorbability.

## Description

### Technical Field

The present disclosure relates to a light detection device including a Fabry-Perot interference filter and an aperture section.

### Background Art

There is known a light detection device including a package having an opening, a light transmission section that closes the opening, a Fabry-Perot interference filter disposed in the package and including a pair of mirror sections, a distance between which being variable, and a light detector disposed in the package (see, for example, Patent Literature 1). In such a light detection device, while the distance between the pair of mirror sections is varied in the Fabry-Perot interference filter, light transmitted through the pair of mirror sections among light incident via the light transmission section is detected by the light detector, whereby a spectral spectrum of light to be measured is obtained.

### Citation List

### Patent Literature

Patent Literature 1: Japanese Unexamined Patent Publication No. 2018-141713

### Summary of Invention

### Technical Problem

In the light detection device as described above, how stray light (for example, light that has not been transmitted through the pair of mirror sections and light that has been obliquely transmitted through the pair of mirror sections) can be suppressed from entering the light detector is extremely important for improving an S/N ratio in wavelength analysis of the light to be measured.

An object of the present disclosure is to provide a light detection device and an aperture section capable of suppressing stray light from entering a light detector.

### Solution to Problem

A light detection device according to one aspect of the present disclosure is [1] "a light detection device including: a package having an opening; a light transmission section closing the opening and having a light-emitting surface located in the package; a Fabry-Perot interference filter disposed on a side opposite to the opening with respect to the light-emitting surface in the package and including a pair of mirror sections, a distance between which being variable; a light detector disposed on a side opposite to the opening with respect to the Fabry-Perot interference filter in the package; and a first aperture section having a first aperture located between the light-emitting surface and the Fabry-Perot interference filter in the package, in which the first aperture section includes a first surrounding part surrounding the first aperture, and a surface of the first surrounding part on the Fabry-Perot interference filter side is separated from the Fabry-Perot interference filter and has light absorbability".

In the light detection device according to [1], the first aperture is located between the light-emitting surface of the light transmission section and the Fabry-Perot interference filter. As a result, light incident on the opening at a large incident angle hardly travels to a space on the Fabry-Perot interference filter side. Furthermore, in the light detection device according to [1], the surface of the first surrounding part surrounding the first aperture on the Fabry-Perot interference filter side is separated from the Fabry-Perot interference filter and has light absorbability. As a result, light having passed through the first aperture and reflected by an inner surface of the package enters the surface of the first surrounding part on the Fabry-Perot interference filter side, and is easily attenuated on the surface. Therefore, according to the light detection device according to [1], it is possible to suppress stray light from entering the light detector.

The light detection device according to one aspect of the present disclosure may be [2] "the light detection device according to [1], in which an outer edge of the first aperture is located inside an outer edge of the opening when viewed from a facing direction of the pair of mirror sections". According to the light detection device according to [2], since the incident angle of the light passing through the opening and the first aperture and entering the pair of mirror sections becomes small, an S/N ratio and resolution can be improved in wavelength analysis of light to be measured.

The light detection device according to one aspect of the present disclosure may be [3] "the light detection device according to [1] or [2], in which the light transmission section includes a light transmitting member closing the opening, and a bandpass filter disposed on a side opposite to the opening with respect to the light transmitting member". According to the light detection device according to [3], since light in a predetermined wavelength range can be made incident on the pair of mirror sections, the S/N ratio and resolution can be improved in wavelength analysis of light to be measured.

The light detection device according to one aspect of the present disclosure may be [4] "the light detection device according to [1] or [2], in which the light transmission section is a light transmitting member closing the opening". According to the light detection device according to [4], it is possible to simplify a structure of the light transmission section.

The light detection device according to one aspect of the present disclosure may be [5] "the light detection device according to any one of [1] to [4], in which the first aperture section is the first surrounding part having a plate-like shape and fixed to at least one of the package and the light transmission section". According to the light detection device according to [5], it is possible to position the first aperture at a predetermined position while simplifying the structure of the first aperture section.

The light detection device according to one aspect of the present disclosure may be [6] "the light detection device according to [5], in which positioning of the first aperture section in a direction perpendicular to a facing direction of the pair of mirror sections is performed by the first surrounding part and the package". According to the light detection device according to [6], at the time of manufacturing the light detection device, a center line of the first aperture can be matched with a center line of the opening by passive alignment.

The light detection device according to one aspect of the present disclosure may be [7] "the light detection device according to [5] or [6], in which positioning of the first aperture section in a facing direction of the pair of mirror sections is performed by the first surrounding part and the light transmission section". According to the light detection device according to [7], at the time of manufacturing the light detection device, a distance between the opening and the first aperture can be set to a predetermined distance by passive alignment.

The light detection device according to one aspect of the present disclosure may be [8] "the light detection device according to any one of [1] to [4], in which the first aperture section is the first surrounding part having a film-like shape and formed on the light-emitting surface". According to the light detection device according to [8], it is possible to position the first aperture at a predetermined position while simplifying the structure of the first aperture section.

The light detection device according to one aspect of the present disclosure may be [9] "the light detection device according to any one of [1] to [4], in which the first aperture section further includes a support part supporting the first surrounding part in the package". According to the light detection device according to [9], the first aperture can be positioned at a predetermined position regardless of a shape of the package.

The light detection device according to one aspect of the present disclosure may be [10] "the light detection device according to any one of [1] to [9] further including a light absorbing film formed on an inner surface of the package". According to the light detection device according to [10], stray light can be attenuated not only on the surface of the first surrounding part on the Fabry-Perot interference filter side but also on the inner surface of the package.

The light detection device according to one aspect of the present disclosure may be [11] "the light detection device according to any one of [1] to [10], further including a second aperture section having a second aperture located on a side opposite to the light-emitting surface with respect to the opening outside the package". According to the light detection device according to [11], since light incident on the second aperture at a large incident angle hardly passes through the opening, it is possible to suppress stray light from entering the light detector.

The light detection device according to one aspect of the present disclosure may be [12] "the light detection device according to [11], in which an outer edge of the second aperture is located inside an outer edge of the opening when viewed from a facing direction of the pair of mirror sections". According to the light detection device according to [12], since the incident angle of the light passing through the second aperture, the opening, and the first aperture and entering the pair of mirror sections becomes small, it is possible to improve the S/N ratio and resolution in the wavelength analysis of the light to be measured.

The light detection device according to one aspect of the present disclosure may be [13] "the light detection device according to [11] or [12], in which the second aperture section includes a second surrounding part surrounding the second aperture, and a fitting part connected to the second surrounding part and fitted to the package, positioning of the second aperture section in a direction perpendicular to a facing direction of the pair of mirror sections is performed by the fitting part and the package, and positioning of the second aperture section in the facing direction of the pair of mirror sections is performed by the fitting part and the package or by the second surrounding part and the package". According to the light detection device according to [13], at the time of manufacturing the light detection device, a center line of the second aperture can be matched with the center line of the opening by passive alignment, and a distance between the opening and the second aperture can be set to a predetermined distance by passive alignment.

### Advantageous Effects of Invention

According to the present disclosure, it is possible to provide a light detection device and an aperture section capable of suppressing stray light from entering a light detector.

### Brief Description of Drawings

FIG. 1 is a cross-sectional view of a light detection device according to a first embodiment.
FIG. 2 is a perspective view of a Fabry-Perot interference filter illustrated in FIG. 1.
FIG. 3 is a cross-sectional view of the Fabry-Perot interference filter taken along line III-III illustrated in FIG. 2.
FIG. 4 is a plan view of the light detection device illustrated in FIG. 1.
FIG. 5 is a cross-sectional view of a light detection device according to a second embodiment.
FIG. 6 is a cross-sectional view of a light detection device according to a third embodiment.
FIG. 7 is a cross-sectional view of a light detection device according to a fourth embodiment.
FIG. 8 is a cross-sectional view of a light detection device according to a fifth embodiment.
FIG. 9 is a plan view of the light detection device illustrated in FIG. 8.
FIG. 10 is a cross-sectional view of a light detection device according to a sixth embodiment.
FIG. 11 is a cross-sectional view of a light detection device according to a seventh embodiment.
FIG. 12 is a view for describing an effect of a first aperture section.
FIG. 13 is a view for describing an effect of the first aperture section.
FIG. 14 is a view for describing an effect of the first aperture section.
FIG. 15 is a view for describing an effect of the first aperture section.
FIG. 16 is a view for describing an effect of the first aperture section and a second aperture section.
FIG. 17 is a view for describing an effect of the first aperture section and the second aperture section.
FIG. 18 is a view for describing an effect of the first aperture section and the second aperture section.
FIG. 19 is a view illustrating results of spectroscopic analysis by light detection devices of Comparative Example and Examples 1 to 4.
FIG. 20 is a view illustrating results of spectroscopic analysis by the light detection devices of Comparative Example and Examples 1 to 4.

### Description of Embodiments

Hereinafter, embodiments of the present disclosure will be described in detail with reference to the drawings. Note that in the drawings, the same or corresponding parts are denoted by the same reference signs, and redundant description will be omitted.

### [First Embodiment]

### [Configuration of Light Detection Device]

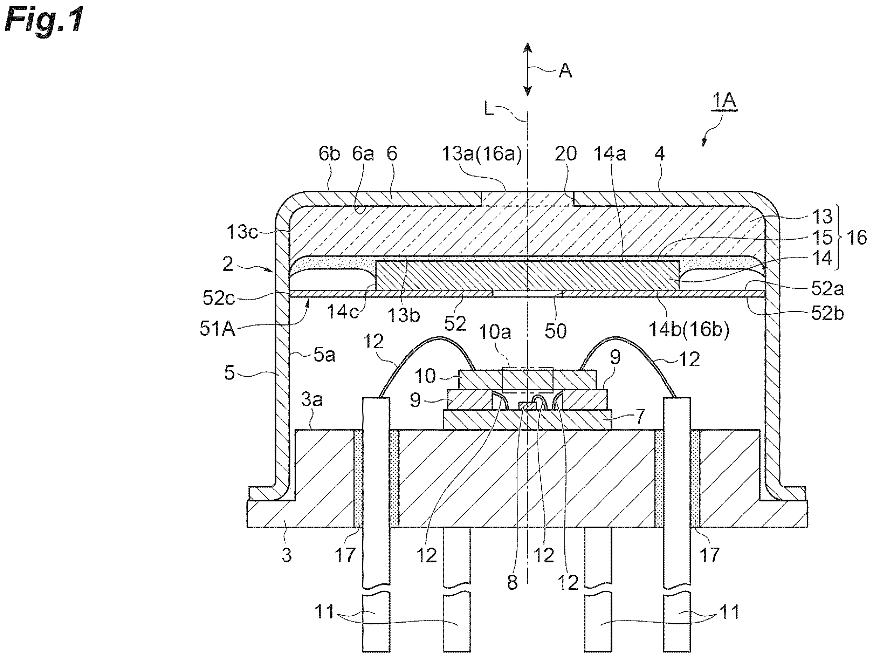

As illustrated in FIG. 1, a light detection device 1A according to a first embodiment includes a package 2. The package 2 is a CAN package having a stem 3 and a cap 4. The cap 4 includes a side wall 5 and a top wall 6. The side wall 5 and the top wall 6 are integrally formed of a metal material. The top wall 6 is formed integrally with the side wall 5 so as to cover one opening of the cylindrical side wall 5. The stem 3 is formed of a metal material. The stem 3 is airtightly joined to the side wall 5 so as to cover the other opening of the cylindrical side wall 5.

On an inner surface 3a of the stem 3, a wiring substrate 7 is fixed. The substrate material of the wiring substrate 7 is, for example, silicon, ceramic, quartz, glass, plastic, or the like. On the wiring substrate 7, a temperature compensating element (not illustrated) such as a light detector 8 and a thermistor is mounted. The light detector 8 is, for example, an infrared detector. As the infrared detector, for example, a quantum sensor using InGaAs or the like, a thermal sensor using a thermopile, a bolometer, or the like can be used. In a case where light of different wavelength ranges of ultraviolet, visible, and near infrared regions is detected, a silicon photodiode or other components can be used as the light detector 8, for example. Note that a light receiving region of the light detector 8 may be configured by one light detection element having one light receiving unit, or may be configured by one light detection element having a plurality of light receiving units arranged in an array. Furthermore, the light receiving region of the light detector 8 may include a plurality of light detection elements.

On the wiring substrate 7, a plurality of spacers 9 are fixed. The material of each spacer 9 is, for example, silicon, ceramic, quartz, glass, plastic, or the like. A Fabry-Perot interference filter 10 is fixed on the plurality of spacers 9. That is, the Fabry-Perot interference filter 10 is supported by the plurality of spacers 9. A light transmission region 10a of the Fabry-Perot interference filter 10 faces the light receiving unit of the light detector 8. Note that the spacers 9 may be integrally formed with the wiring substrate 7. In addition, the Fabry-Perot interference filter 10 may be supported by one spacer 9.

A plurality of lead pins 11 are fixed to the stem 3. Each of the lead pins 11 penetrates through the stem 3 in a state where electrical insulation and airtightness with the stem 3 are ensured by an insulating member 17. Each lead pin 11 is electrically connected to an electrode pad provided to the wiring substrate 7, a terminal of the light detector 8, a terminal of the temperature compensating element, and a terminal of the Fabry-Perot interference filter 10 via wires 12. In the light detection device 1A, input and output of an electric signal to and from each of the light detector 8, the temperature compensating element, and the Fabry-Perot interference filter 10 are performed via the plurality of lead pins 11.

The package 2 has an opening 20. The opening 20 is formed in the top wall 6 of the cap 4 in such a manner as to face the light transmission region 10a of the Fabry-Perot interference filter 10. A light transmitting member 13 is airtightly joined to an inner surface 6a of the top wall 6. The light transmitting member 13 closes the opening 20. The light transmitting member 13 has a light incident surface 13a and a light-emitting surface 13b facing each other, and a side surface 13c. The light incident surface 13a of the light transmitting member 13 is substantially flush with an outer surface 6b of the top wall 6 at the opening 20. The side surface 13c of the light transmitting member 13 is in contact with an inner surface 5a of the side wall 5 of the cap 4. Such a light transmitting member 13 is formed by disposing a glass pellet inside the cap 4 with the opening 20 facing down and melting the glass pellet.

A bandpass filter 14 is fixed to the light-emitting surface 13b of the light transmitting member 13 by a bonding member 15 having light permeability. The bandpass filter 14 includes a light incident surface 14a and a light-emitting surface 14b facing each other, and a side surface 14c. The side surface 14c of the bandpass filter 14 is separated from the inner surface 5a of the side wall 5 of the cap 4. As an example, the bandpass filter 14 includes a light transmitting member formed in a rectangular plate-like shape by a light transmitting material (for example, silicon, glass, or the like) and a dielectric multilayer film (for example, a multilayer film including a combination of a high refractive material such as TiO₂ or Ta₂O₅ and a low refractive material such as SiO₂ or MgF₂) formed on a surface of the light transmitting member on a side opposite to the opening 20. Note that the dielectric multilayer film may be formed on the surface of the light transmitting member on the opening 20 side.

In the first embodiment, the light transmitting member 13, the bonding member 15, and the bandpass filter 14 configure a light transmission section 16. That is, the light transmission section 16 includes the light transmitting member 13 that closes the opening 20 and the bandpass filter 14 disposed on the opposite side of the opening 20 with respect to the light transmitting member 13. The light incident surface 16a of the light transmission section 16 is the light incident surface 13a of the light transmitting member 13, and the light-emitting surface 16b of the light transmission section 16 is the light-emitting surface 14b of the bandpass filter 14. The light-emitting surface 16b of the light transmission section 16 is located in the package 2.

The light detection device 1A includes a first aperture section 51A having a first aperture 50. The first aperture 50 is a light passing hole located between the light-emitting surface 16b of the light transmission section 16 and the Fabry-Perot interference filter 10 in the package 2. Details of the first aperture section 51A will be described later.

In the first embodiment, the opening 20 of the package 2, the first aperture 50 of the first aperture section 51A, the light transmission region 10a of the Fabry-Perot interference filter 10, and the light receiving region of the light detector 8 are arranged on a straight line L in this order. When viewed from a direction parallel to the straight line L, the straight line L passes through the centers of the opening 20, the first aperture 50, the light transmission region 10a, and the light receiving region. That is, in the light detection device 1A, the Fabry-Perot interference filter 10 is disposed on the side opposite to the opening 20 with respect to the light-emitting surface 16b of the light transmission section 16 in the package 2, and the light detector 8 is disposed on the side opposite to the opening 20 with respect to the Fabry-Perot interference filter 10 in the package 2.

In the light detection device 1A configured as described above, when light to be measured is incident on the light transmission region 10a of the Fabry-Perot interference filter 10 via the opening 20, the light transmission section 16 (that is, the light transmitting member 13, the bonding member 15, and the bandpass filter 14), and the first aperture 50, light of a predetermined wavelength among the light to be measured is transmitted through the pair of mirror sections of the Fabry-Perot interference filter 10. The light transmitted through the pair of mirror sections of the Fabry-Perot interference filter 10 enters the light detector 8 and is detected by the light detector 8. As an example, in order to obtain a spectral spectrum of the light to be measured, in the light detection device 1A, while a voltage applied to the Fabry-Perot interference filter 10 is varied (that is, while the distance between the pair of mirror sections is varied in the Fabry-Perot interference filter 10), the light transmitted through the light transmission region 10a of the Fabry-Perot interference filter 10 is detected by the light detector 8.

### [Configuration of Fabry-Perot Interference Filter]

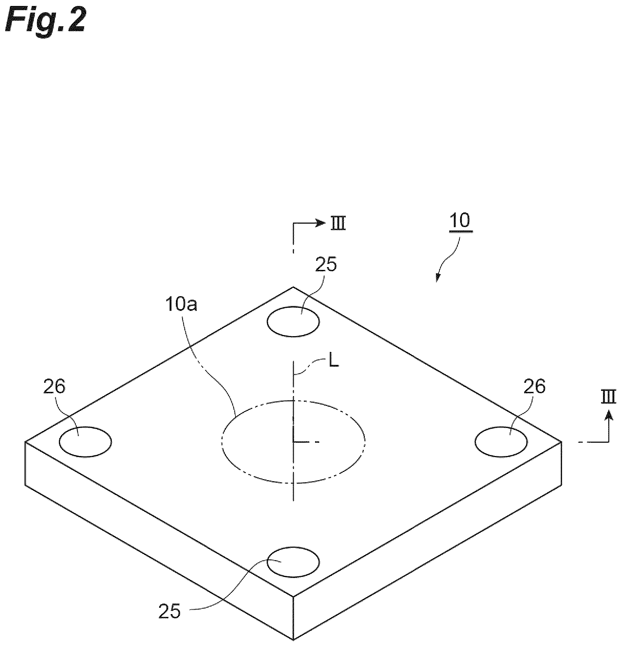

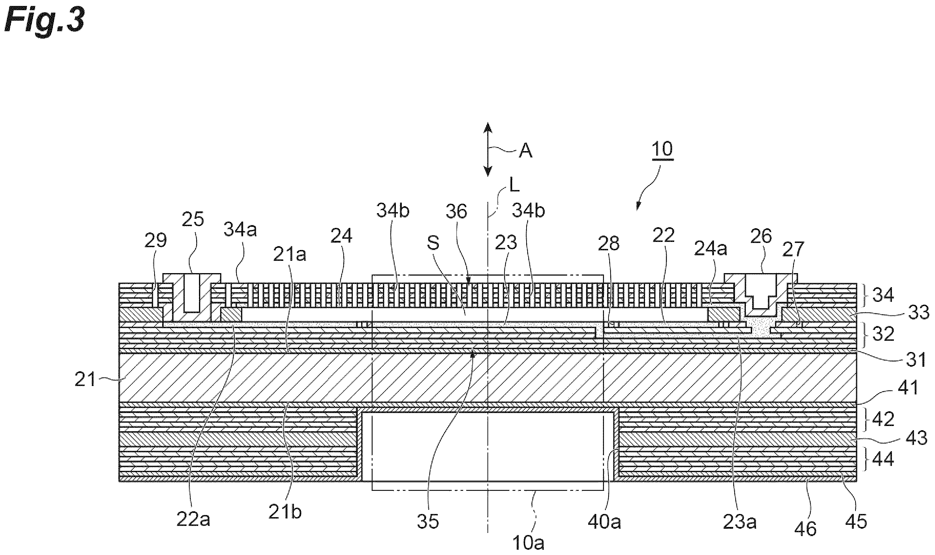

As illustrated in FIG. 2, the Fabry-Perot interference filter 10 includes the light transmission region 10a. As an example, the Fabry-Perot interference filter 10 has a rectangular plate-like shape, and the light transmission region 10a has a columnar shape. As illustrated in FIG. 3, the Fabry-Perot interference filter 10 includes a first mirror section 35 and a second mirror section 36 as the pair of mirror sections. A distance between the first mirror section 35 and the second mirror section 36 is variable in the light transmission region 10a. The first mirror section 35 and the second mirror section 36 face each other in a direction parallel to the straight line L. Hereinafter, the facing direction of the first mirror section 35 and the second mirror section 36 is referred to as a direction A.

The Fabry-Perot interference filter 10 includes a substrate 21. On a surface 21a of the substrate 21 on the light incident side, an anti-reflective layer 31, a first laminated body 32, an intermediate layer 33, and a second laminated body 34 are laminated in the order. A gap (air gap) S is formed between the first laminated body 32 and the second laminated body 34 by the intermediate layer 33 of a frame shape. The material of the substrate 21 is, for example, silicon, quartz, glass, or the like. When the material of the substrate 21 is silicon, the material of each of the anti-reflective layer 31 and the intermediate layer 33 is, for example, silicon oxide or the like. A thickness of the intermediate layer 33 is, for example, an integral multiple of 1/2 of a design center wavelength. Note that the thickness of the intermediate layer 33 may be larger than the integral multiple of 1/2 of the design center wavelength, as necessary.

A part of the first laminated body 32 corresponding to the light transmission region 10a functions as the first mirror section 35. The first mirror section 35 is supported by the substrate 21 via the anti-reflective layer 31. As an example, the first laminated body 32 includes a plurality of polysilicon layers and a plurality of silicon nitride layers, each layer of which laminated alternately. An optical thickness of each of the layers configuring the first mirror section 35 is, for example, an integral multiple of 1/4 of the design center wavelength. Note that a silicon oxide layer may be used instead of the silicon nitride layer.

A part of the second laminated body 34 corresponding to the light transmission region 10a functions as the second mirror section 36 facing the first mirror section 35 via the gap S. The second mirror section 36 is supported by the substrate 21 via the anti-reflective layer 31, the first laminated body 32, and the intermediate layer 33. As an example, the second laminated body 34 includes a plurality of polysilicon layers and a plurality of silicon nitride layers, each layer of which laminated alternately. An optical thickness of each of the layers configuring the second mirror section 36 is, for example, the integral multiple of 1/4 of the design center wavelength. Note that a silicon oxide layer may be used instead of the silicon nitride layer.

In a part of the second laminated body 34 corresponding to the gap S, a plurality of through-holes 34b are formed so as to reach the gap S from a surface 34a of the second laminated body 34 on a side opposite to the gap S. The plurality of through-holes 34b are formed to an extent that they do not substantially affect the function of the second mirror section 36. The plurality of through-holes 34b are used when the gap S is formed by removing a part of the intermediate layer 33 by etching.

In the first mirror section 35, a first electrode 22 is formed in such a manner as to surround the light transmission region 10a. In the first mirror section 35, a second electrode 23 is formed in such a manner as to include the light transmission region 10a. Each of the first electrode 22 and the second electrode 23 is formed by doping a part of a polysilicon layer with an impurity to lower the resistance of the part. A size of the second electrode 23 is substantially the same as a size of the light transmission region 10a.

In the second mirror section 36, a third electrode 24 is formed. The third electrode 24 faces the first electrode 22 and the second electrode 23 via the gap S in the direction A. The third electrode 24 is formed by doping a part of a polysilicon layer with an impurity to lower the resistance of the part.

In the Fabry-Perot interference filter 10, the second electrode 23 is located on the same plane as the first electrode 22 in the direction perpendicular to the direction A. The distance between the second electrode 23 and the third electrode 24 is substantially the same as the distance between the first electrode 22 and the third electrode 24. When viewed from the direction A, the second electrode 23 is surrounded by the first electrode 22.

The Fabry-Perot interference filter 10 includes a pair of terminals 25 with the light transmission region 10a interposed therebetween. Each of the terminals 25 is disposed in a through-hole extending from the surface 34a of the second laminated body 34 to the first laminated body 32. Each of the terminals 25 is electrically connected to the first electrode 22 via wiring 22a.

The Fabry-Perot interference filter 10 includes a pair of terminals 26 with the light transmission region 10a interposed therebetween. Each of the terminals 26 is disposed in a through-hole extending from the surface 34a of the second laminated body 34 to the intermediate layer 33. Each of the terminals 26 is electrically connected to the second electrode 23 via wiring 23a and is also electrically connected to the third electrode 24 via wiring 24a. Note that a direction in which the pair of terminals 26 are arranged with the light transmission region 10a interposed therebetween is a direction perpendicular to a direction in which the pair of terminals 25 are arranged with the light transmission region 10a interposed therebetween (see FIG. 2).

A pair of trenches 27 are formed in the first laminated body 32. Each of the trenches 27 annularly extends in such a manner as to surround a part of the wiring 23a extending from each terminal 26 along the direction A. Each of the trenches 27 electrically insulates the first electrode 22 from the wiring 23a. A trench 28 is formed in the first laminated body 32. The trench 28 annularly extends along an inner edge of the first electrode 22. The trench 28 electrically insulates the first electrode 22 from the second electrode 23. Regions inside the trenches 27 and 28 may be filled with an insulating material or void.

A pair of trenches 29 are formed in the second laminated body 34. Each of the trenches 29 annularly extends in such a manner as to surround each of the terminals 25. Each of the trenches 29 electrically insulates each of the terminals 25 from the third electrode 24. Regions inside the trenches 29 may be filled with an insulating material or void.

On a surface 21b of the substrate 21 on the light emitting side, an anti-reflective layer 41, a third laminated body 42, an intermediate layer 43, and a fourth laminated body 44 are laminated in the order. The anti-reflective layer 41 and the intermediate layer 43 have a similar configuration to those of the anti-reflective layer 31 and the intermediate layer 33, respectively. The third laminated body 42 and the fourth laminated body 44 have lamination configurations symmetrical to those of the first laminated body 32 and the second laminated body 34, respectively, with respect to the substrate 21. The anti-reflective layer 41, the third laminated body 42, the intermediate layer 43, and the fourth laminated body 44 have a function of suppressing warping of the substrate 21.

In the third laminated body 42, the intermediate layer 43, and the fourth laminated body 44, an opening 40a is formed in such a manner as to include the light transmission region 10a. When viewed from the direction A, a size of the opening 40a is substantially the same as the size of the light transmission region 10a. The opening 40a is open on the light emitting side, and a bottom surface of the opening 40a reaches the anti-reflective layer 41. A light shielding layer 45 is formed on a surface of the fourth laminated body 44 on the light emitting side. The material of the light shielding layer 45 is, for example, aluminum or the like. A protective layer 46 is formed on a surface of the light shielding layer 45 and an inner surface of the opening 40a. The material of the protective layer 46 is, for example, aluminum oxide or the like. Note that by setting a thickness of the protective layer 46 to 100 nm or less (preferably, about 30 nm), optical influence by the protective layer 46 can be made negligible.

In the Fabry-Perot interference filter 10 configured as described above, when a potential difference is generated between the first electrode 22 and the third electrode 24 by applying a voltage to the first electrode 22 and the third electrode 24 via the plurality of terminals 25 and 26, an electrostatic force corresponding to the potential difference is generated between the first electrode 22 and the third electrode 24. With the electrostatic force generated between the first electrode 22 and the third electrode 24, the second mirror section 36 is attracted to the first mirror section 35, and the distance between the first mirror section 35 and the second mirror section 36 is adjusted. At this point, the second electrode 23 having the same potential as that of the third electrode 24 functions as a compensation electrode, and the second mirror section 36 is kept flat in the light transmission region 10a. As described above, in the Fabry-Perot interference filter 10, the distance between the first mirror section 35 and the second mirror section 36 is allowed to be variable. Here, the wavelength of light transmitted through the Fabry-Perot interference filter 10 depends on the distance between the first mirror section 35 and the second mirror section 36. Therefore, the wavelength of the light transmitted through the Fabry-Perot interference filter 10 can be selected by adjusting the voltage (potential difference generated between the first electrode 22 and the third electrode 24) applied to the first electrode 22 and the third electrode 24.

### [Configuration of First Aperture Section]

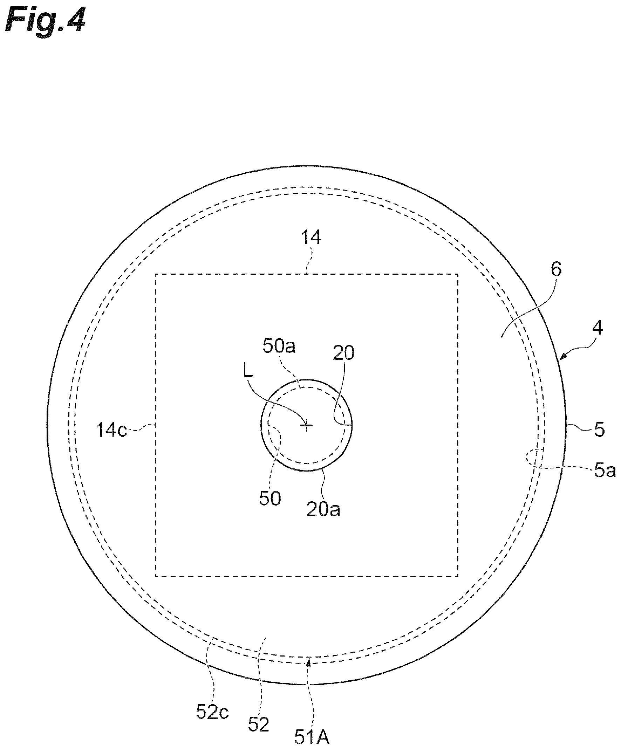

As illustrated in FIGS. 1 and 4, the first aperture section 51A is configured by a plate-like first surrounding part 52. When viewed from the direction A, the first surrounding part 52 continuously surrounds the first aperture 50. When viewed from the direction A, an outer edge 50a of the first aperture 50 is located inside an outer edge 20a of the opening 20 of the package 2. The first surrounding part 52 is disposed between the light transmission section 16 and the Fabry-Perot interference filter 10 in the package 2. The first surrounding part 52 has a pair of surfaces 52a and 52b facing each other and a side surface 52c. The surface 52a is a surface on the light transmission section 16 side, and is in contact with the light-emitting surface 16b (that is, the light-emitting surface 14b of the bandpass filter 14) of the light transmission section 16. The surface 52b is a surface on the Fabry-Perot interference filter 10 side and is separated from the Fabry-Perot interference filter 10.

At least the surface 52b of an outer surface of the first surrounding part 52 on the Fabry-Perot interference filter 10 side has light absorbability. As an example, chromium plating, black alumite treatment, electroless nickel plating, application of black paint, and the like are applied to the outer surface of the first surrounding part 52 formed in a plate-like shape using aluminum, stainless steel, or the like (in addition, a roughening treatment may be performed), so that light absorbability with respect to light in a visible to near-infrared wavelength range is imparted to the outer surface of the first surrounding part 52. Not only the surface 52b but also the surface 52a may have light absorbability. Note that in the surface having light absorbability, reflectance of incident light is suppressed to, for example, 20% or less. The reflectance is preferably 10% or less, and more preferably 5% or less. In a case where the reflectance has wavelength dependency or incident angle dependency, the reflectance may be within this numerical value as a rough tendency in the wavelength band used by the Fabry-Perot interference filter 10. For example, the reflectance may be measured at a representative incident angle (for example, 5°, 30°, 45°, and 60°), and an average value thereof may be included in the numerical value.

Positioning of the first aperture section 51A in the direction perpendicular to the direction A is performed by the first surrounding part 52 and the package 2. Specifically, the positioning of the first aperture section 51A in the direction perpendicular to the direction A is performed by fitting the side surface 52c of the first surrounding part 52 and the inner surface 5a of the side wall 5 of the cap 4. Positioning of the first aperture section 51A in the direction A is performed by the first surrounding part 52 and the light transmission section 16. Specifically, the positioning of the first aperture section 51A in the direction A is performed by contact between the surface 52a of the first surrounding part 52 and the light-emitting surface 16b of the light transmission section 16.

In a state where the first aperture section 51A is positioned, the first surrounding part 52 is fixed to at least one of the package 2 and the light transmission section 16. Specifically, the first surrounding part 52 is fixed to at least one of the package 2 and the light transmission section 16 by at least one of a bonding member (not illustrated) disposed between the side surface 14c of the bandpass filter 14 and the inner surface 5a of the side wall 5, a bonding member (not illustrated) disposed at a corner section formed by the surface 52b of the first surrounding part 52 and the inner surface of the side wall 5, and a bonding member (not illustrated) disposed between the light-emitting surface 14b of the bandpass filter 14 and the surface 52a of the first surrounding part 52.

### [Functions and Effects]

In the light detection device 1A, the first aperture 50 is located between the light-emitting surface 16b of the light transmission section 16 and the Fabry-Perot interference filter 10. As a result, the light incident on the opening 20 at a large incident angle hardly travels to a space on the Fabry-Perot interference filter 10 side. Furthermore, in the light detection device 1A, the surface 52b of the first surrounding part 52 surrounding the first aperture 50 on the Fabry-Perot interference filter 10 side is separated from the Fabry-Perot interference filter 10 and has light absorbability. As a result, the light having passed through the first aperture 50 and reflected by the inner surface of the package 2 enters the surface 52b of the first surrounding part 52, and is easily attenuated by the surface 52b of the first surrounding part 52. Therefore, it is possible to suppress stray light from entering the light detector 8. Note that when the surface 52a of the first surrounding part 52 on the opening 20 side has light absorbability, the light incident on the opening 20 at a large incident angle is attenuated while being repeatedly reflected between the surface 52a and the inner surface 6a of the top wall 6, and as a result, it is possible to suppress the light from traveling from the first aperture 50 to the space on the Fabry-Perot interference filter 10 side.

In the light detection device 1A, the outer edge 50a of the first aperture 50 is located inside the outer edge 20a of the opening 20 when viewed from the direction A. As a result, since the incident angle of the light passing through the opening 20 and the first aperture 50 and entering the first mirror section 35 and the second mirror section 36 becomes small, the S/N ratio and resolution can be improved in wavelength analysis of light to be measured.

In the light detection device 1A, the light transmission section 16 includes the light transmitting member 13 that closes the opening 20 and the bandpass filter 14 disposed on the opposite side of the opening 20 with respect to the light transmitting member 13. As a result, since light in a predetermined wavelength range can be made incident on the first mirror section 35 and the second mirror section 36, the S/N ratio and resolution can be improved in the wavelength analysis of the light to be measured.

In the light detection device 1A, the first aperture section 51A is the plate-like first surrounding part 52 fixed to at least one of the package 2 and the light transmission section 16. As a result, it is possible to position the first aperture 50 at a predetermined position while simplifying the structure of the first aperture section 51A.

In the light detection device 1A, the positioning of the first aperture section 51A in the direction perpendicular to the direction A is performed by the first surrounding part 52 and the package 2. As a result, at the time of manufacturing the light detection device 1A, a center line of the first aperture 50 can be matched with a center line of the opening 20 by passive alignment.

In the light detection device 1A, the positioning of the first aperture section 51A in the direction A is performed by the first surrounding part 52 and the light transmission section 16. As a result, at the time of manufacturing the light detection device 1A, a distance between the opening 20 and the first aperture 50 can be set to a predetermined distance by passive alignment.

### [Second Embodiment]

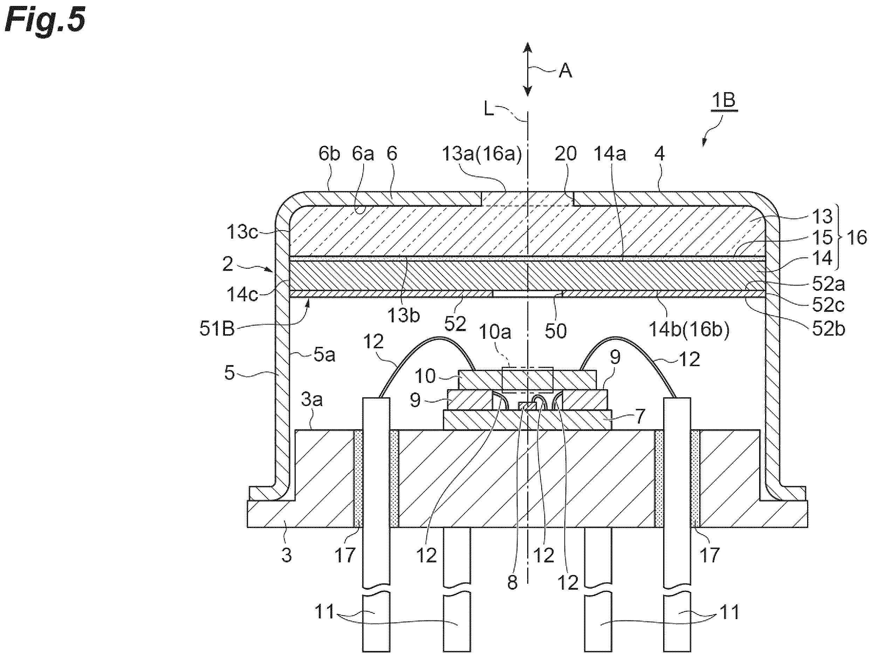

As illustrated in FIG. 5, a light detection device 1B according to a second embodiment is different from the light detection device 1A according to the first embodiment in that a first aperture section 51B is configured by the film-like first surrounding part 52.

The first surrounding part 52 of the first aperture section 51B is a light absorbing film formed on the light-emitting surface 16b (that is, the light-emitting surface 14b of the bandpass filter 14) of the light transmission section 16, and continuously surrounds the first aperture 50 when viewed from the direction A. The surface 52b of the first surrounding part 52 is separated from the Fabry-Perot interference filter 10 and has light absorbability. The side surface 14c of the bandpass filter 14 and the side surface 52c of the first surrounding part 52 reach the inner surface 5a of the side wall 5 of the cap 4.

According to the light detection device 1B, similarly to the light detection device 1A, it is possible to suppress stray light from entering the light detector 8.

In the light detection device 1B, the first aperture section 51B is the film-like first surrounding part 52 formed on the light-emitting surface 16b of the light transmission section 16. As a result, it is possible to position the first aperture 50 at a predetermined position while simplifying the structure of the first aperture section 51B.

### [Third Embodiment]

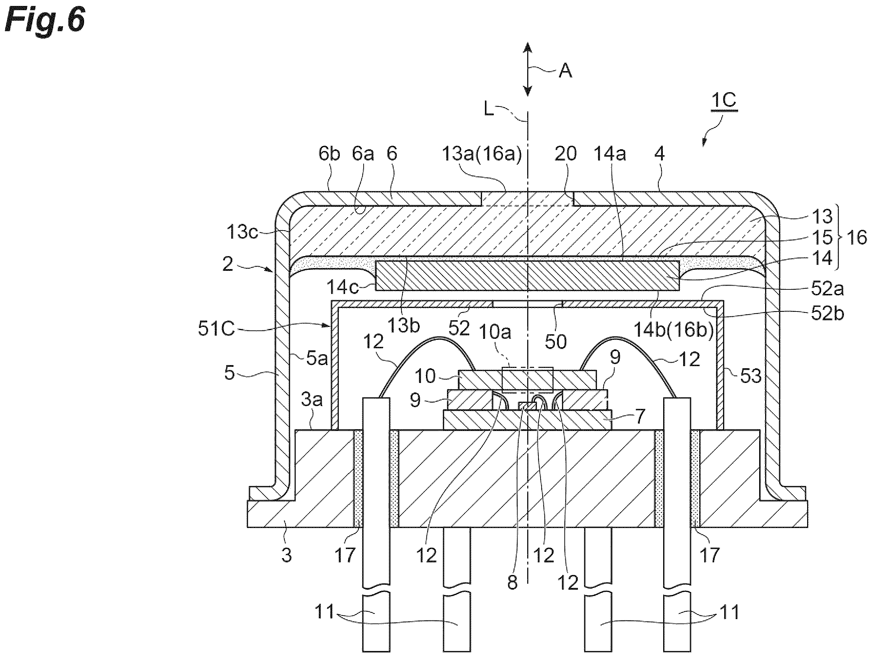

As illustrated in FIG. 6, a light detection device 1C according to a third embodiment is different from the light detection device 1A according to the first embodiment in that a first aperture section 51C is configured by the first surrounding part 52 and the support part 53.

The first surrounding part 52 of the first aperture section 51C is positioned between the light transmission section 16 and the Fabry-Perot interference filter 10 in the package 2, and continuously surrounds the first aperture 50 when viewed from the direction A. The support part 53 supports the first surrounding part 52 in the package 2 in a state where the surface 52a is separated from the light transmission section 16 and the surface 52b is separated from the Fabry-Perot interference filter 10. The support part 53 has a cylindrical shape, and is erected on the inner surface 3a of the stem 3 in a state of surrounding the wiring substrate 7, the light detector 8, the plurality of spacers 9, the Fabry-Perot interference filter 10, the plurality of lead pins 11, and the plurality of wires 12 when viewed from the direction A. The first surrounding part 52 is formed integrally with the support part 53 so as to cover the opening of the cylindrical support part 53 on the light transmission section 16 side. The surface 52b of the first surrounding part 52 is separated from the Fabry-Perot interference filter 10 and has light absorbability. Note that the support part 53 may be configured by a plurality of column portions extending in the direction A.

According to the light detection device 1C, similarly to the light detection device 1A, it is possible to suppress stray light from entering the light detector 8.

In the light detection device 1C, the first aperture section 51C includes the first surrounding part 52 and the support part 53 that supports the first surrounding part 52 in the package 2. As a result, the first aperture 50 can be positioned at a predetermined position regardless of a shape of the package 2.

### [Fourth Embodiment]

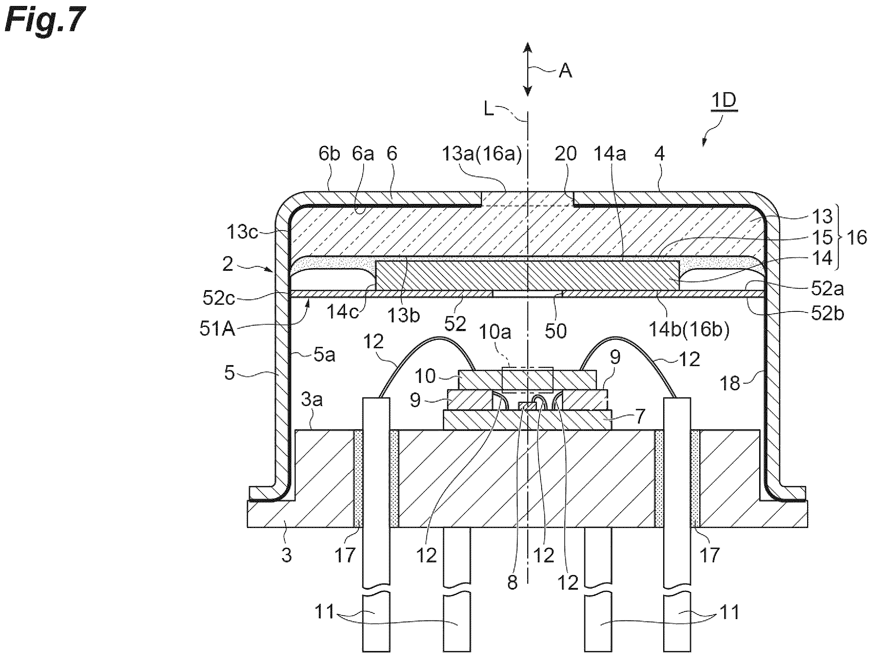

As illustrated in FIG. 7, a light detection device 1D according to a fourth embodiment is different from the light detection device 1A according to the first embodiment in that a light absorbing film 18 is formed on the inner surface of the package 2.

The light absorbing film 18 is formed on an inner surface (that is, the inner surface 5a of the side wall 5 and the inner surface 6a of the top wall 6) of the cap 4. Note that the light absorbing film 18 may not be formed on the inner surface 6a of the top wall 6. The light absorbing film 18 may be formed on the inner surface 3a of the stem 3.

According to the light detection device 1D, similarly to the light detection device 1A, it is possible to suppress stray light from entering the light detector 8.

In the light detection device 1D, the light absorbing film 18 is formed on the inner surface of the package 2. As a result, stray light can be attenuated not only on the surface 52b of the first surrounding part 52 but also on the inner surface of the package 2.

### [Fifth Embodiment]

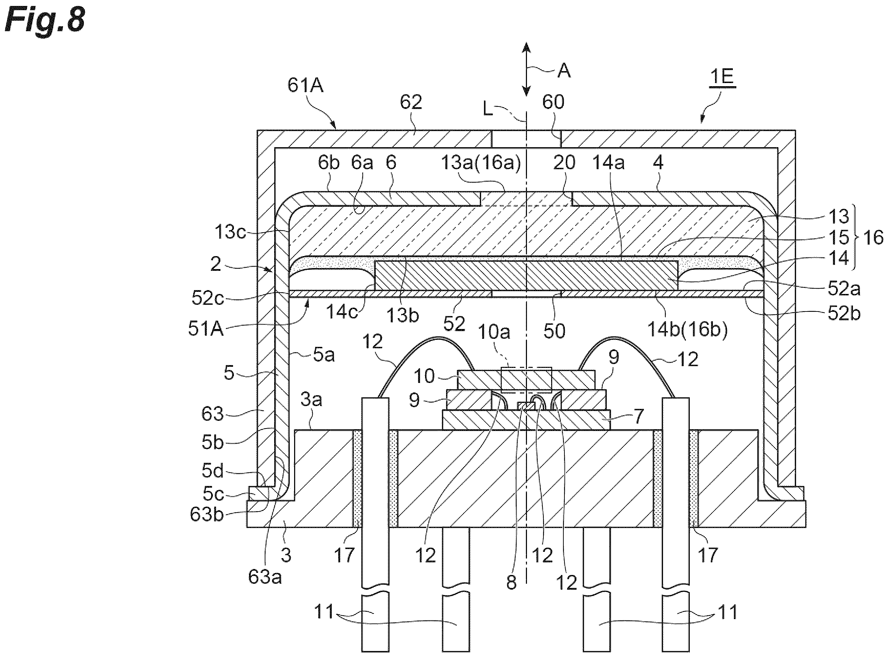

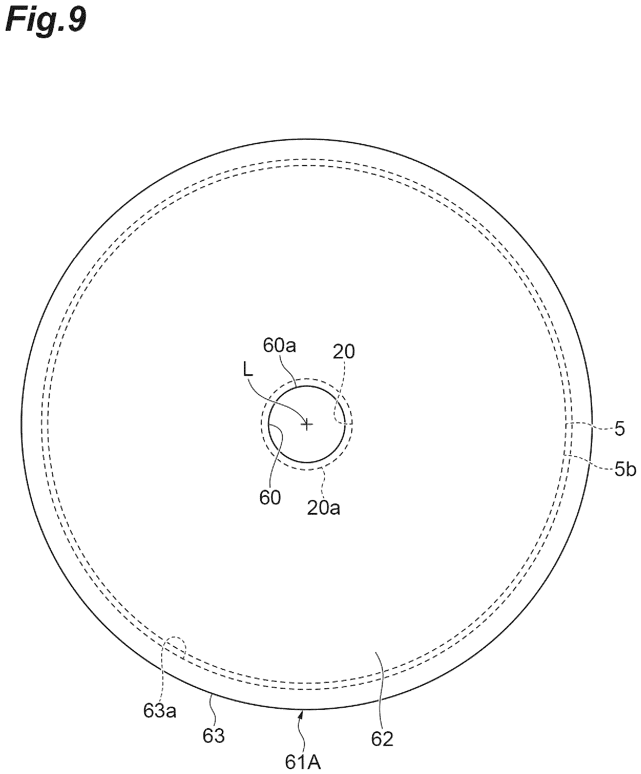

As illustrated in FIGS. 8 and 9, a light detection device 1E according to a fifth embodiment is different from the light detection device 1A according to the first embodiment in that the light detection device 1E includes a second aperture section 61A having a second aperture 60. The second aperture 60 is a light passing hole located on the side opposite to the light-emitting surface 16b of the light transmission section 16 with respect to the opening 20 outside the package 2. When viewed from the direction A, the straight line L passes through a center of the second aperture 60.

The second aperture section 61A is configured by a second surrounding part 62 and a fitting part 63. When viewed from the direction A, the second surrounding part 62 continuously surrounds the second aperture 60. When viewed from the direction A, an outer edge 60a of the second aperture 60 is located inside the outer edge 20a of the opening 20 of the package 2. The fitting part 63 is connected to the second surrounding part 62 and fits to the package 2. In the fifth embodiment, the fitting part 63 has a cylindrical shape and is fitted to the side wall 5 of the cap 4. The second surrounding part 62 is formed integrally with the fitting part 63 so as to cover the opening of the cylindrical fitting part 63 on the side opposite to the stem 3.

The positioning of the second aperture section 61A in the direction perpendicular to the direction A is performed by the fitting part 63 and the package 2. Specifically, the positioning of the second aperture section 61A in the direction perpendicular to the direction A is performed by fitting the inner surface 63a of the fitting part 63 and the outer surface 5b of the side wall 5 of the cap 4. The positioning of the second aperture section 61A in the direction A is performed by the fitting part 63 and the package 2. Specifically, the positioning of the second aperture section 61A in the direction A is performed by contact between the end surface 63b of the fitting part 63 and the surface 5d of the flange 5c of the side wall 5. The end surface 63b is an end surface of the cylindrical fitting part 63 on the side opposite to the second surrounding part 62. The flange 5c is an outward flange provided at an end portion of the cylindrical side wall 5 on a side opposite to the top wall 6. In a state where the second aperture section 61A is positioned, the fitting part 63 is fixed to the package 2. Note that the fitting part 63 may be configured by a plurality of column portions extending in the direction A.

According to the light detection device 1E, similarly to the light detection device 1A, it is possible to suppress stray light from entering the light detector 8.

In the light detection device 1E, the second aperture section 61A includes the second aperture 60 located on the opposite side to the light-emitting surface 16b of the light transmission section 16 with respect to the opening 20 outside the package 2. As a result, since the light incident on the second aperture 60 at a large incident angle hardly passes through the opening 20, it is possible to suppress stray light from entering the light detector 8.

In the light detection device 1E, the outer edge 60a of the second aperture 60 is located inside the outer edge 20a of the opening 20 when viewed from the direction A. As a result, since the incident angle of the light passing through the second aperture 60, the opening 20, and the first aperture 50 and entering the first mirror section 35 and the second mirror section 36 becomes small, the S/N ratio and resolution can be improved in the wavelength analysis of the light to be measured.

In the light detection device 1E, the positioning of the second aperture section 61A in the direction perpendicular to the direction A is performed by the fitting part 63 and the package 2, and the positioning of the second aperture section 61A in the direction A is performed by the fitting part 63 and the package 2. As a result, at the time of manufacturing the light detection device 1A, a center line of the second aperture 60 can be matched with the center line of the opening 20 by passive alignment, and a distance between the opening 20 and the second aperture 60 can be set to a predetermined distance by passive alignment.

### [Sixth Embodiment]

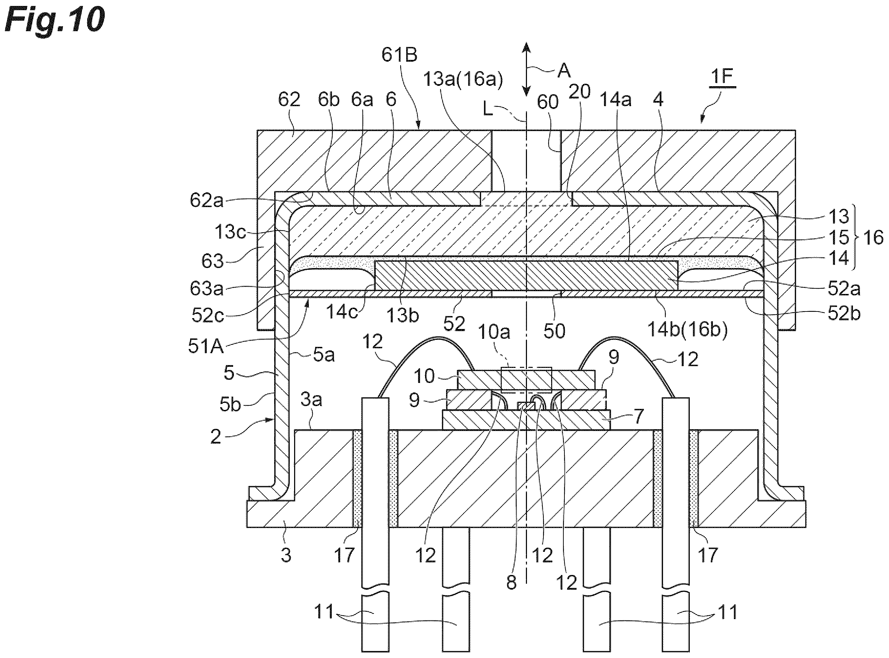

As illustrated in FIG. 10, a light detection device 1F according to a sixth embodiment is different from the light detection device 1E according to the fifth embodiment in that positioning of the second aperture section 61B in the direction A is performed by the second surrounding part 62 and the package 2.

The positioning of the second aperture section 61B in the direction perpendicular to the direction A is performed by the fitting part 63 and the package 2. Specifically, the positioning of the second aperture section 61B in the direction perpendicular to the direction A is performed by fitting the inner surface 63a of the fitting part 63 and the outer surface 5b of the side wall 5 of the cap 4. The positioning of the second aperture section 61B in the direction A is performed by the second surrounding part 62 and the package 2. Specifically, the positioning of the second aperture section 61B in the direction A is performed by contact between the surface 62a of the second surrounding part 62 and the outer surface 6b of the top wall 6 of the cap 4. The surface 62a is a surface of the second surrounding part 62 on the light transmission section 16 side. In a state where the second aperture section 61B is positioned, at least one of the second surrounding part 62 and the fitting part 63 is fixed to the package 2. Note that the fitting part 63 may be configured by a plurality of column portions extending in the direction A.

According to the light detection device 1F, similarly to the light detection device 1A, it is possible to suppress stray light from entering the light detector 8.

In the light detection device 1F, the second aperture section 61A includes the second aperture 60 located on the opposite side to the light-emitting surface 16b of the light transmission section 16 with respect to the opening 20 outside the package 2. As a result, since the light incident on the second aperture 60 at a large incident angle hardly passes through the opening 20, it is possible to suppress stray light from entering the light detector 8.

In the light detection device 1F, the outer edge 60a of the second aperture 60 is located inside the outer edge 20a of the opening 20 when viewed from the direction A. As a result, since the incident angle of the light passing through the second aperture 60, the opening 20, and the first aperture 50 and entering the first mirror section 35 and the second mirror section 36 becomes small, the S/N ratio and resolution can be improved in the wavelength analysis of the light to be measured.

In the light detection device 1F, the positioning of the second aperture section 61B in the direction perpendicular to the direction A is performed by the fitting part 63 and the package 2, and the positioning of the second aperture section 61B in the direction A is performed by the second surrounding part 62 and the package 2. As a result, at the time of manufacturing the light detection device 1A, the center line of the second aperture 60 can be matched with the center line of the opening 20 by passive alignment, and the distance between the opening 20 and the second aperture 60 can be set to a predetermined distance by passive alignment.

### [Seventh Embodiment]

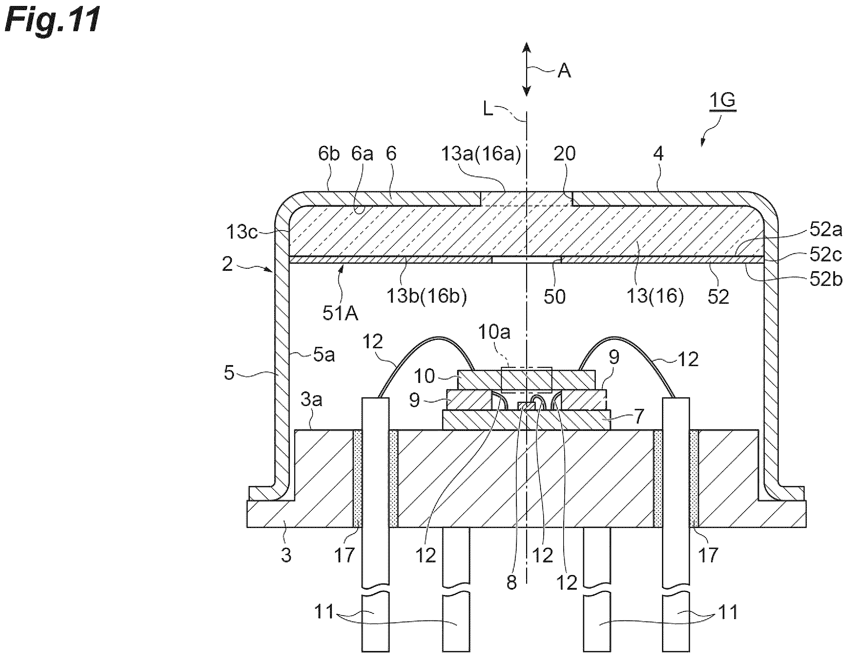

As illustrated in FIG. 11, a light detection device 1G according to a seventh embodiment is different from the light detection device 1A according to the first embodiment in that the light transmission section 16 is configured by the light transmitting member 13.

In the light detection device 1G, the light transmission section 16 includes the light transmitting member 13 that closes the opening 20 of the package 2 and does not include the bandpass filter 14 (see FIG. 1). In this case, the light incident surface 16a of the light transmission section 16 is the light incident surface 13a of the light transmitting member 13, and the light-emitting surface 16b of the light transmission section 16 is the light-emitting surface 13b of the light transmitting member 13. The surface 52a of the first surrounding part 52 is in contact with the light-emitting surface 13b of the light transmitting member 13.

According to the light detection device 1G, similarly to the light detection device 1A, it is possible to suppress stray light from entering the light detector 8.

In the light detection device 1G, the light transmission section 16 is the light transmitting member 13 that closes the opening 20. As a result, the structure of the light transmission section 16 can be simplified.

### [Effect of First Aperture Section]

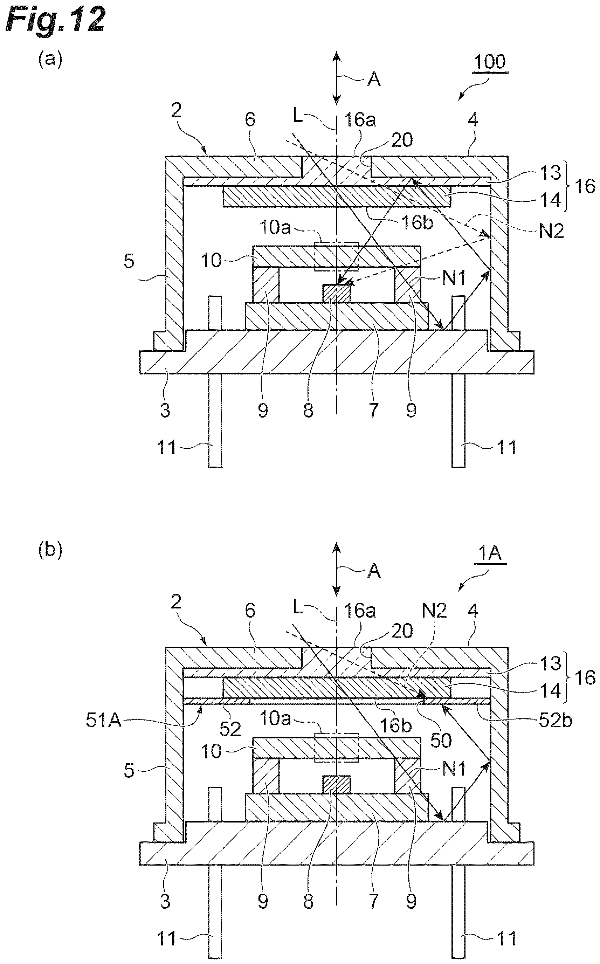

The effect of the first aperture section 51A will be described in more detail with reference to FIGS. 12(a) to 15(b). Note that in FIGS. 12(a) to 15(b), illustration of the bonding member 15 and the wire 12 is omitted.

As illustrated in FIG. 12(a), in a light detection device 100 not including the first aperture section 51A, stray light N1 incident on the opening 20 at a large incident angle is reflected by the inner surface of the package 2, obliquely passes through the light transmission region 10a of the Fabry-Perot interference filter 10, and is incident on the light detector 8. In addition, in the light detection device 100, stray light N2 incident on the opening 20 at an incident angle larger than the incident angle of the stray light N1 is reflected by the inner surface of the package 2 and is incident on the light detector 8 without being transmitted through the light transmission region 10a of the Fabry-Perot interference filter 10. On the other hand, as illustrated in FIG. 12(b), in the light detection device 1A including the first aperture section 51A, although a diameter of the first aperture 50 is larger than a diameter of the opening 20, the stray light N1 is attenuated by the surface 52a of the first surrounding part 52, and the traveling of the stray light N2 to the space on the Fabry-Perot interference filter 10 side is blocked by the first surrounding part 52. Therefore, in the light detection device 1A including the first aperture section 51A, the incidence of the stray light on the light detector 8 is suppressed as compared with the light detection device 100 not including the first aperture section 51A.

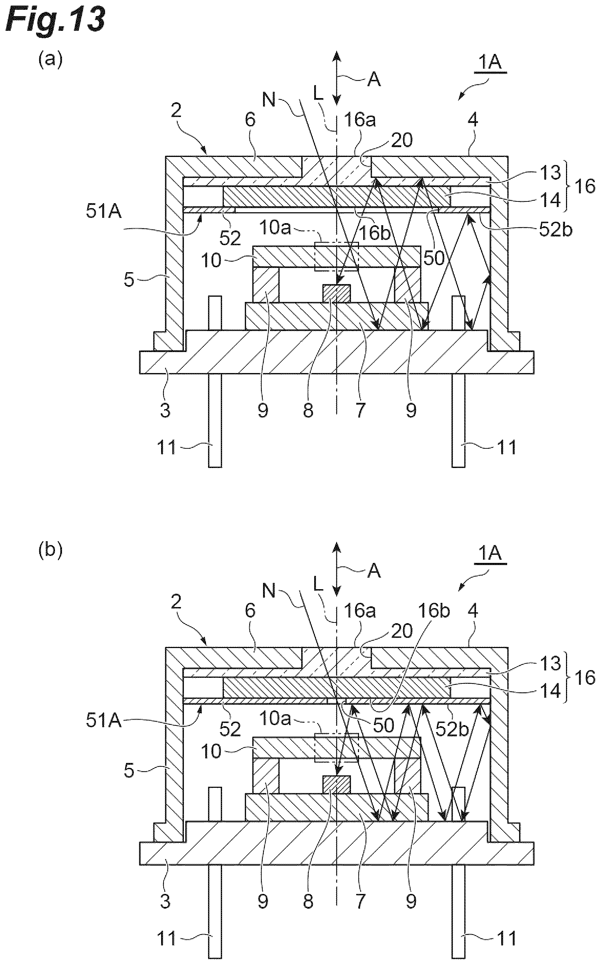

As illustrated in FIG. 13(a), in the light detection device 1A in which the diameter of the first aperture 50 is larger than the diameter of the opening 20, stray light N that is reflected in the package 2 a plurality of times and enters the light detector 8 is attenuated once on the surface 52a of the first surrounding part 52. On the other hand, as illustrated in FIG. 13(b), in the light detection device 1A in which the diameter of the first aperture 50 is smaller than the diameter of the opening 20, the stray light N reflected in the package 2 a plurality of times and incident on the light detector 8 is attenuated on the surface 52a of the first surrounding part 52 a plurality of times. Therefore, in the light detection device 1A in which the diameter of the first aperture 50 is smaller than the diameter of the opening 20, the incidence of the stray light on the light detector 8 is suppressed as compared with the light detection device 1A in which the diameter of the first aperture 50 is larger than the diameter of the opening 20.

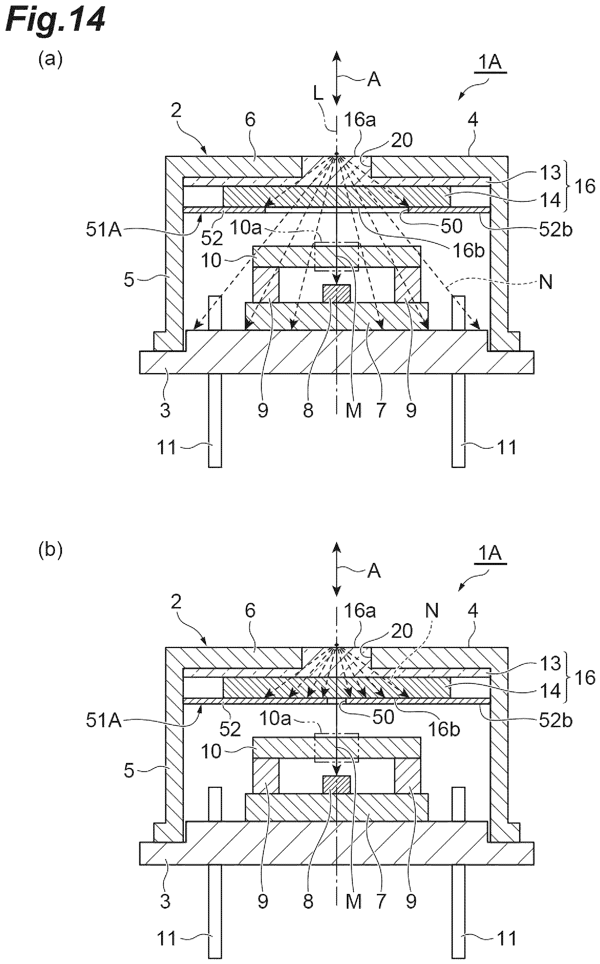

As illustrated in FIG. 14(a), in the light detection device 1A in which the diameter of the first aperture 50 is larger than the diameter of the opening 20, the stray light N that passes through the opening 20 and the first aperture 50 and travels to the space on the Fabry-Perot interference filter 10 side includes stray light having a large incident angle. On the other hand, as illustrated in FIG. 14(b), in the light detection device 1A in which the diameter of the first aperture 50 is smaller than the diameter of the opening 20, the stray light N that passes through the opening 20 and the first aperture 50 and travels to the space on the Fabry-Perot interference filter 10 side does not include stray light having a large incident angle. Therefore, in the light detection device 1A in which the diameter of the first aperture 50 is smaller than the diameter of the opening 20, the incidence of the stray light on the light detector 8 is suppressed as compared with the light detection device 1A in which the diameter of the first aperture 50 is larger than the diameter of the opening 20. Note that light M indicated in FIGS. 14(a) and (b) is the light to be measured.

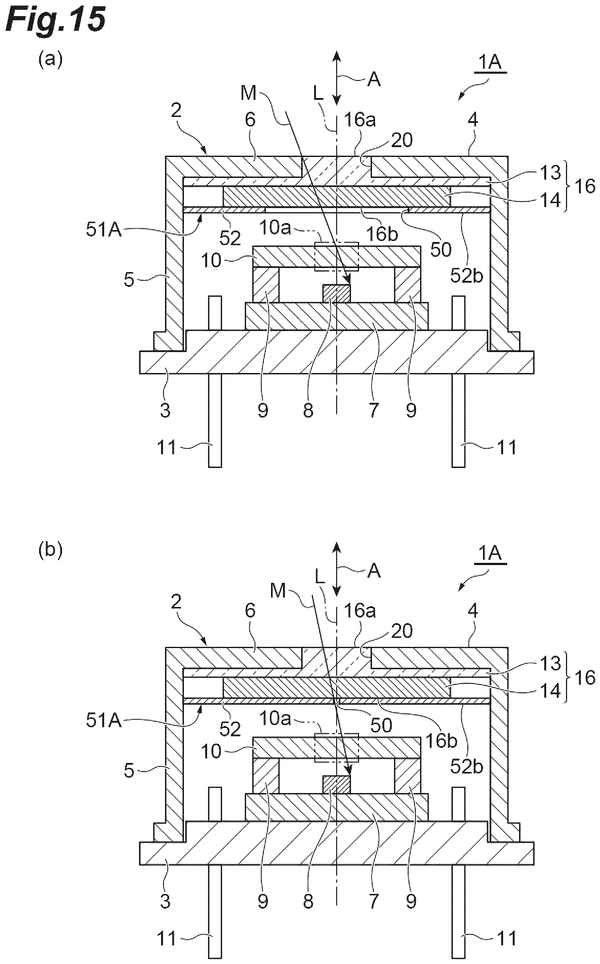

As illustrated in FIG. 15(a), in the light detection device 1A in which the diameter of the first aperture 50 is larger than the diameter of the opening 20, the incident angle of the light M to be measured that passes through the opening 20 and the first aperture 50 and enters the light transmission region 10a of the Fabry-Perot interference filter 10 becomes large. On the other hand, as illustrated in FIG. 15(b), in the light detection device 1A in which the diameter of the first aperture 50 is smaller than the diameter of the opening 20, the incident angle of the light M to be measured that passes through the opening 20 and the first aperture 50 and enters the light transmission region 10a of the Fabry-Perot interference filter 10 becomes small. Therefore, in the light detection device 1A in which the diameter of the first aperture 50 is smaller than the diameter of the opening 20, the S/N ratio and the resolution can be improved in the wavelength analysis of the light to be measured as compared with the light detection device 1A in which the diameter of the first aperture 50 is larger than the diameter of the opening 20.

### [Effects of First Aperture Section and Second Aperture Section]

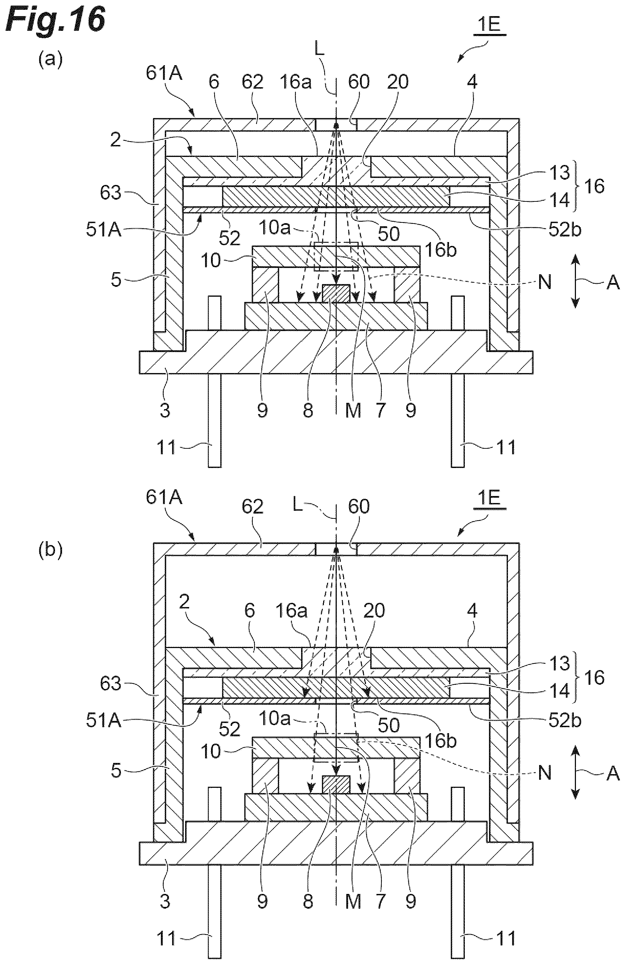

Effects of the first aperture section 51A and the second aperture section 61A will be described in more detail with reference to FIGS. 16(a) to 18(b). Note that in FIGS. 16(a) to 18(b), illustration of the bonding member 15 and the wire 12 is omitted.

As illustrated in FIG. 16(a), in the light detection device 1A in which a distance between the second aperture 60 and the first aperture 50 is small, the stray light N that passes through the second aperture 60, the opening 20, and the first aperture 50 and travels to the space on the Fabry-Perot interference filter 10 side includes stray light having a large incident angle. On the other hand, as illustrated in FIG. 16(b), in the light detection device 1A in which a distance between the second aperture 60 and the first aperture 50 is large, the stray light N that passes through the second aperture 60, the opening 20, and the first aperture 50 and travels to the space on the Fabry-Perot interference filter 10 side does not include stray light having a large incident angle. Therefore, in the light detection device 1A in which the distance between the second aperture 60 and the first aperture 50 is large, the incidence of the stray light on the light detector 8 is suppressed as compared with the light detection device 1A in which the distance between the second aperture 60 and the first aperture 50 is small. Note that light M indicated in FIGS. 16(a) and (b) is the light to be measured.

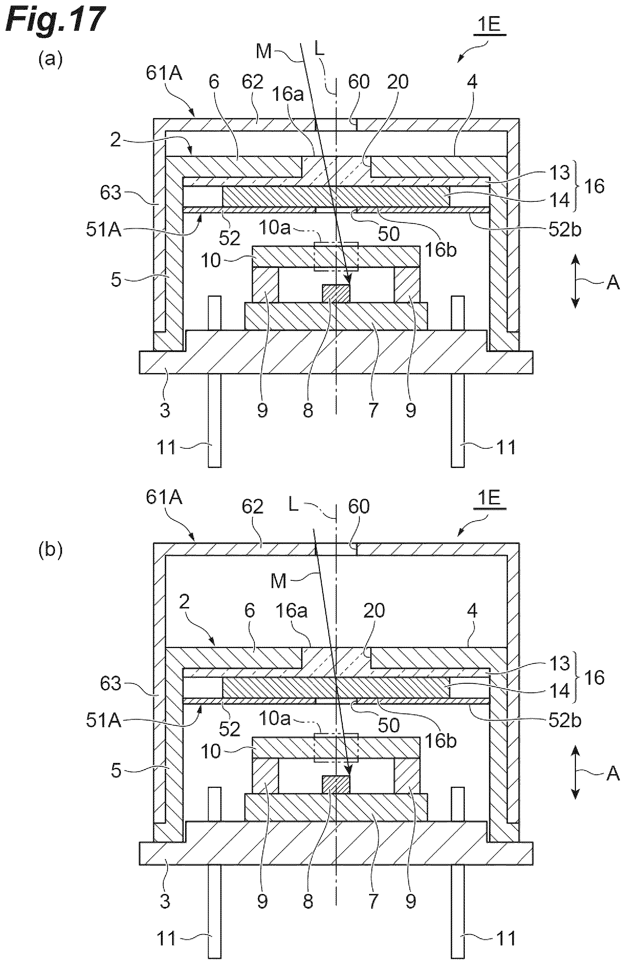

As illustrated in FIG. 17(a), in the light detection device 1A in which the distance between the second aperture 60 and the first aperture 50 is small, the incident angle of the light M to be measured that passes through the second aperture 60, the opening 20, and the first aperture 50 and enters the light transmission region 10a of the Fabry-Perot interference filter 10 becomes large. On the other hand, as illustrated in FIG. 17(b), in the light detection device 1A in which the distance between the second aperture 60 and the first aperture 50 is large, the incident angle of the light M to be measured that passes through the second aperture 60, the opening 20, and the first aperture 50 and enters the light transmission region 10a of the Fabry-Perot interference filter 10 becomes small. Therefore, in the light detection device 1A in which the distance between the second aperture 60 and the first aperture 50 is large, the S/N ratio and resolution can be improved in the wavelength analysis of the light to be measured as compared with the light detection device 1A in which the distance between the second aperture 60 and the first aperture 50 is small.

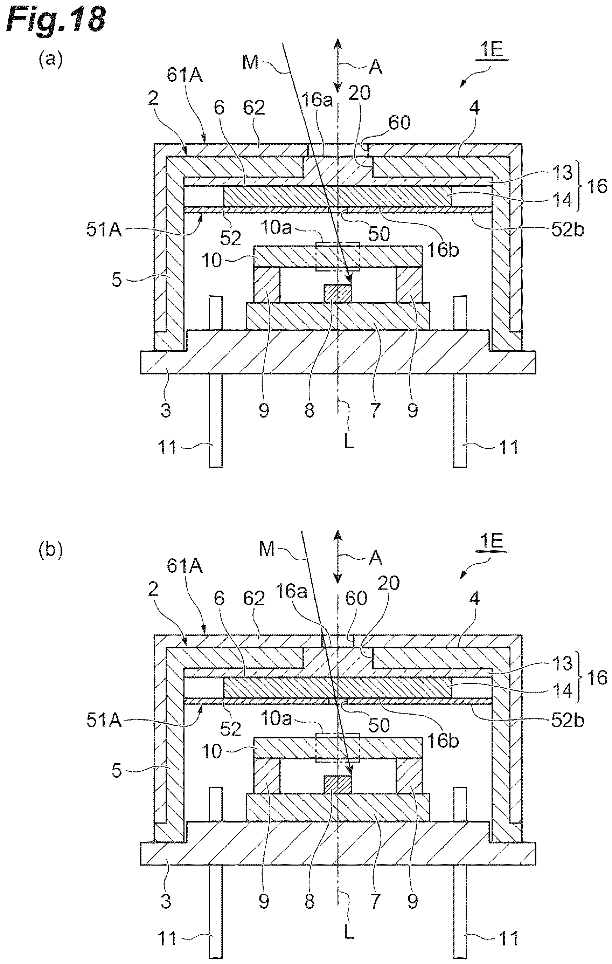

As illustrated in FIG. 18(a), in the light detection device 1A in which the diameter of the second aperture 60 is large, the incident angle of the light M to be measured that passes through the second aperture 60, the opening 20, and the first aperture 50 and enters the light transmission region 10a of the Fabry-Perot interference filter 10 becomes large. On the other hand, as illustrated in FIG. 18(b), in the light detection device 1A in which the diameter of the second aperture 60 is small, the incident angle of the light M to be measured that passes through the second aperture 60, the opening 20, and the first aperture 50 and enters the light transmission region 10a of the Fabry-Perot interference filter 10 becomes small. Therefore, in the light detection device 1A in which the diameter of the second aperture 60 is small, the S/N ratio and resolution can be improved in the wavelength analysis of the light to be measured as compared with the light detection device 1A in which the diameter of the second aperture 60 is large.

### [Results of Spectroscopic Analysis by Light Detection Devices of Comparative Example and Examples 1 to 4]

As a light detection device of a comparative example, a light detection device obtained by removing the first aperture section 51A from the light detection device 1A according to the first embodiment described above was prepared. In the light detection device of the comparative example, a thickness of the top wall 6 of the cap 4 was 0.4 mm, and a diameter of the opening 20 was 1.5 mm.

As light detection devices of Examples 1 and 3, those having the same configuration as the light detection device 1A according to the first embodiment described above were prepared. In the light detection device of Example 1, a thickness of the top wall 6 of the cap 4 was 0.4 mm, a diameter of the opening 20 was 1.5 mm, a thickness of the first surrounding part 52 was 0.1 mm, a diameter of the first aperture 50 was 1.25 mm, and a distance between the opening 20 and the first aperture 50 was 1.1 mm. In the light detection device of Example 3, a thickness of the top wall 6 of the cap 4 was 0.4 mm, a diameter of the opening 20 was 1.5 mm, a thickness of the first surrounding part 52 was 0.1 mm, a diameter of the first aperture 50 was 0.5 mm, and a distance between the opening 20 and the first aperture 50 was 1.1 mm.

As light detection devices of Examples 2 and 4, those having the same configuration as the light detection device 1E according to the fifth embodiment described above were prepared. In the light detection device of Example 2, a thickness of the second surrounding part 62 was 0.1 mm, a diameter of the second aperture 60 was 0.5 mm, a thickness of the top wall 6 of the cap 4 was 0.4 mm, a diameter of the opening 20 was 1.5 mm, a thickness of the first surrounding part 52 was 0.1 mm, a diameter of the first aperture 50 was 1.25 mm, a distance between the second aperture 60 and the opening 20 was 0, and a distance between the opening 20 and the first aperture 50 was 1.1 mm. In the light detection device of Example 4, a thickness of the second surrounding part 62 was 0.1 mm, a diameter of the second aperture 60 was 0.5 mm, a thickness of the top wall 6 of the cap 4 was 0.4 mm, a diameter of the opening 20 was 1.5 mm, a thickness of the first surrounding part 52 was 0.1 mm, a diameter of the first aperture 50 was 0.5 mm, a distance between the second aperture 60 and the opening 20 was 0, and a distance between the opening 20 and the first aperture 50 was 1.1 mm.

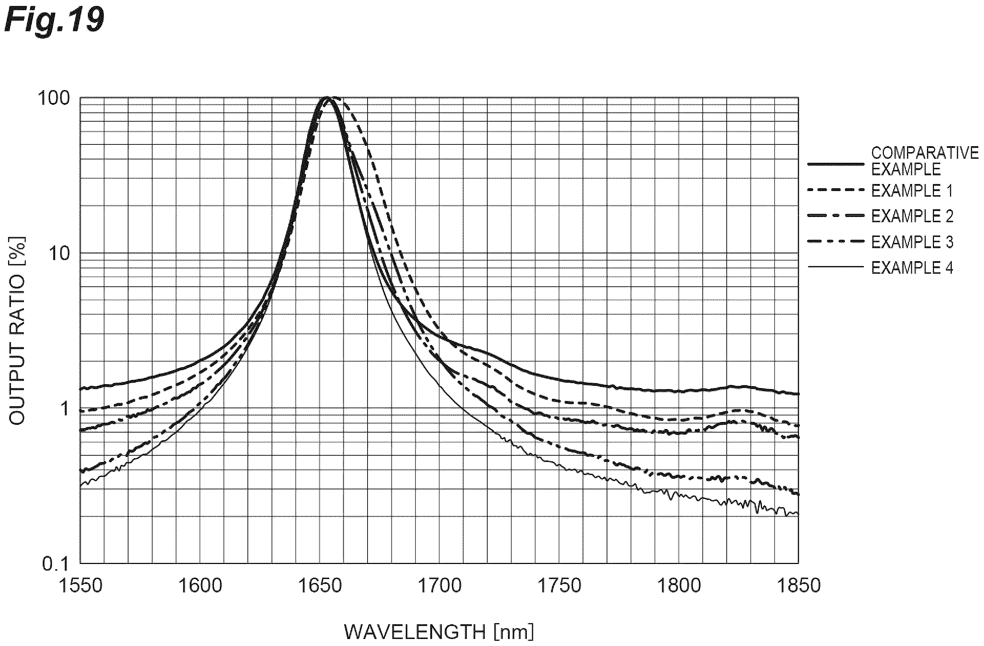

FIG. 19 is a view illustrating a relationship between a wavelength and an output ratio in a case where bright-line light is incident on the light detection devices of Comparative Example and Examples 1 to 4. In this spectroscopic analysis, bright-line light having a wavelength of 1650 nm was incident on the light detection devices of Comparative Example and Examples 1 to 4. In FIG. 19, the wavelength on a horizontal axis corresponds to the distance between the first mirror section 35 and the second mirror section 36 in the Fabry-Perot interference filter 10. In FIG. 19, the output ratio on a vertical axis is an output ratio in a case where a peak output is 100%. As illustrated in FIG. 19, since a tail portion of the output ratio with respect to the peak output decreases in the order of Comparative Example, Example 1, Example 2, Example 3, and Example 4, it can be said that the effect of suppressing the incidence of the stray light on the light detector 8 is improved in the order of Comparative Example, Example 1, Example 2, Example 3, and Example 4.

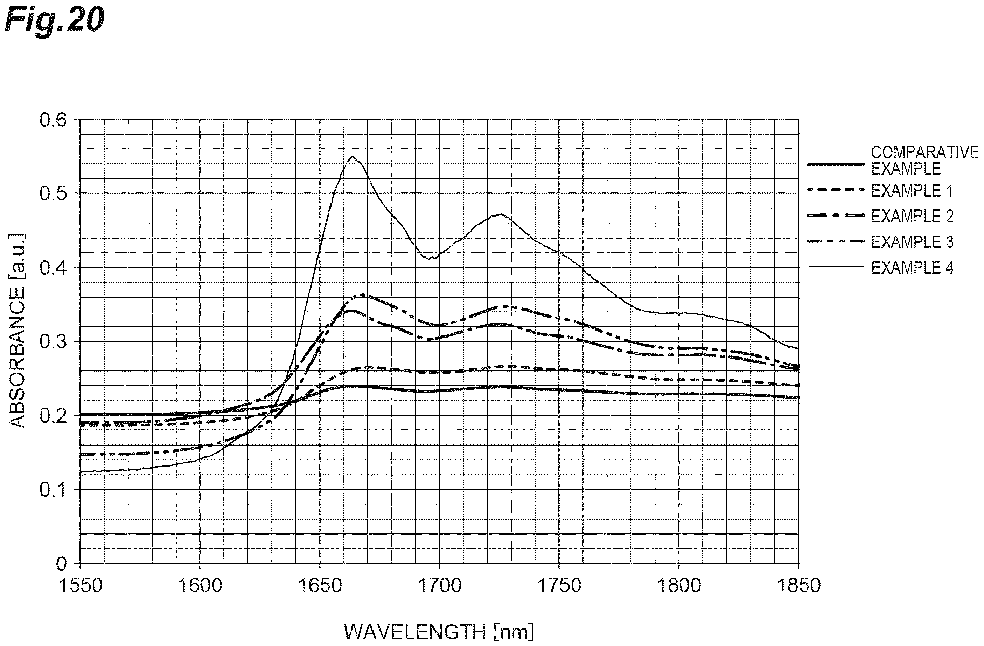

FIG. 20 is a view illustrating a relationship between a wavelength and absorbance when light reflected on a surface of an actual sample is incident on the light detection devices of Comparative Example and Examples 1 to 4. In this spectroscopic analysis, a PET plate having a thickness of 1 mm was irradiated with light in a near-infrared wavelength range, and light reflected on a surface of the PET plate was made incident on the light detection devices of Comparative Example and Examples 1 to 4. As illustrated in FIG. 19, since undulations appearing in the absorbance are remarkable in the order of Comparative Example, Example 1, Example 2, Example 3, and Example 4, it can be said that the S/N ratio and resolution are improved in the order of Comparative Example, Example 1, Example 2, Example 3, and Example 4.

### [Modification]

The present disclosure is not limited to the above embodiments. For example, the light absorbing film 18 may be applied to any of the light detection devices 1A to 1C and 1E to 1G. Furthermore, the second aperture section 61A may be applied to any of the light detection devices 1A to 1D and 1G. Furthermore, the second aperture section 61B may be applied to any of the light detection devices 1A to 1D and 1G. In addition, the light transmission section 16 configured by the light transmitting member 13 may be applied to any of the light detection devices 1A to 1F.

The light transmission section 16 is not limited to one configured by the light transmitting member 13, the bonding member 15, and the bandpass filter 14, or one configured by the light transmitting member 13. The light transmission section 16 needs only to close the opening 20 of the package 2 and to have the light-emitting surface 16b located in the package 2.

The first surrounding part 52 may intermittently (for example, via a slit) surround the first aperture 50 when viewed from the direction A. When viewed from the direction A, the outer edge 50a of the first aperture 50 may be located outside the outer edge 20a of the opening 20 of the package 2.

The second surrounding part 62 may intermittently (for example, via a slit) surround the second aperture 60 when viewed from the direction A. When viewed from the direction A, the outer edge 60a of the second aperture 60 may be located outside the outer edge 20a of the opening 20 of the package 2.

Note that according to "an aperture section used in a light detection device, the light detection device including: a package having an opening, a light transmission section closing the opening, a Fabry-Perot interference filter disposed on one side with respect to the opening and the light transmission section in the package and including a pair of mirror sections, a distance between which being variable, and a light detector disposed on the one side with respect to the Fabry-Perot interference filter in the package, the aperture section including a surrounding part surrounding an aperture located on the other side with respect to the opening outside the package; and a fitting part connected to the surrounding part and fitted to the package, in which positioning in a direction perpendicular to a facing direction of the pair of mirror sections is performed by the fitting part and the package, and positioning in the facing direction of the pair of mirror sections is performed by the fitting part and the package or by the surrounding part and the package", by attaching it to the light detection device, it is possible to suppress stray light from entering the light detector in the light detection device.

### Reference Signs List

1A, 1B, 1C, 1D, 1E, 1F, 1G light detection device
2 package
8 light detector
10 Fabry-Perot interference filter
13 light transmitting member
14 bandpass filter
16 light transmission section
16b light-emitting surface
18 light absorbing film
20 opening
20a outer edge
35 first mirror section
36 second mirror section
50 first aperture
50a outer edge
51A, 51B, 51C first aperture section
52 first surrounding part
52b surface
53 support part
60 second aperture
60a outer edge
61A, 61B second aperture section
62 second surrounding part
63 fitting part
A direction (facing direction of pair of mirror sections)

## Claims

1. A light detection device comprising:
a package having an opening;
a light transmission section closing the opening and having a light-emitting surface located in the package;
a Fabry-Perot interference filter disposed on a side opposite to the opening with respect to the light-emitting surface in the package and including a pair of mirror sections, a distance between which being variable;
a light detector disposed on a side opposite to the opening with respect to the Fabry-Perot interference filter in the package; and
a first aperture section having a first aperture located between the light-emitting surface and the Fabry-Perot interference filter in the package, wherein
the first aperture section includes a first surrounding part surrounding the first aperture, and
a surface of the first surrounding part on the Fabry-Perot interference filter side is separated from the Fabry-Perot interference filter and has light absorbability.

2. The light detection device according to claim 1, wherein an outer edge of the first aperture is located inside an outer edge of the opening when viewed from a facing direction of the pair of mirror sections.

3. The light detection device according to claim 1 or 2, wherein the light transmission section includes a light transmitting member closing the opening, and a bandpass filter disposed on a side opposite to the opening with respect to the light transmitting member.

4. The light detection device according to claim 1 or 2, wherein the light transmission section is a light transmitting member closing the opening.

5. The light detection device according to any one of claims 1 to 4, wherein the first aperture section is the first surrounding part having a plate-like shape and fixed to at least one of the package and the light transmission section.

6. The light detection device according to claim 5, wherein positioning of the first aperture section in a direction perpendicular to a facing direction of the pair of mirror sections is performed by the first surrounding part and the package.

7. The light detection device according to claim 5 or 6, wherein positioning of the first aperture section in a facing direction of the pair of mirror sections is performed by the first surrounding part and the light transmission section.

8. The light detection device according to any one of claims 1 to 4, wherein the first aperture section is the first surrounding part having a film-like shape and formed on the light-emitting surface.

9. The light detection device according to any one of claims 1 to 4, wherein the first aperture section further includes a support part supporting the first surrounding part in the package.

10. The light detection device according to any one of claims 1 to 9, further comprising a light absorbing film formed on an inner surface of the package.

11. The light detection device according to any one of claims 1 to 10, further comprising a second aperture section having a second aperture located on a side opposite to the light-emitting surface with respect to the opening outside the package.

12. The light detection device according to claim 11, wherein an outer edge of the second aperture is located inside an outer edge of the opening when viewed from a facing direction of the pair of mirror sections.

13. The light detection device according to claim 11 or 12, wherein
the second aperture section includes a second surrounding part surrounding the second aperture, and a fitting part connected to the second surrounding part and fitted to the package,
positioning of the second aperture section in a direction perpendicular to a facing direction of the pair of mirror sections is performed by the fitting part and the package, and
positioning of the second aperture section in the facing direction of the pair of mirror sections is performed by the fitting part and the package or by the second surrounding part and the package.

14. An aperture section used in a light detection device, the light detection device including:
a package having an opening,
a light transmission section closing the opening,
a Fabry-Perot interference filter disposed on one side with respect to the opening and the light transmission section in the package and including a pair of mirror sections, a distance between which being variable, and
a light detector disposed on the one side with respect to the Fabry-Perot interference filter in the package, the aperture section comprising:
a surrounding part surrounding an aperture located on another side with respect to the opening outside the package; and
a fitting part connected to the surrounding part and fitted to the package, wherein
positioning in a direction perpendicular to a facing direction of the pair of mirror sections is performed by the fitting part and the package, and
positioning in the facing direction of the pair of mirror sections is performed by the fitting part and the package or by the surrounding part and the package.
